# EUROPEAN PATENT APPLICATION

(11) **EP 3 611 612 A1**
(43) Date of publication of application: **19.02.2020**
(21) Application number: 18188821.5
(22) Date of filing: 14.08.2018
(51) Int. Cl.: G06F 3/16, H04R 1/10

(54) **DETERMINING A USER INPUT**

(71) Applicant: Nokia Technologies Oy, 02610 Espoo (FI)
(72) Inventor: MIN, Chulhong, Cambridge, CB2 9AE (GB); KAWSAR, Fahim, Cambridge, CB2 0NU (GB); MATHUR, Akhil, Cambridge, CB5 8AG (GB)
(74) Representative: Nokia EPO representatives

(57) **Abstract**

An apparatus, method and computer program are described for obtaining in-ear detected audio data at an ear-worn terminal; obtaining in-ear detected motion data at the ear-worn terminal; and determining a user input based on a combination of the in-ear detected audio data and in-ear detected motion data.

## Description

### Field

The present specification relates to determining a user input based on in-ear detected audio and motion data.

### Background

Ear-worn terminals, such as wearable audio terminals, are known. There remains a need for alternative arrangements for using and interfacing with such ear-worn terminals.

### Summary

In a first aspect, this specification provides an apparatus comprising: means for obtaining in-ear detected audio data at an ear-worn terminal; means for obtaining in-ear detected motion data at the ear-worn terminal; and means for determining a user input based on a combination of the in-ear detected audio data and the in-ear detected motion data. The in-ear detected audio data and the in-ear detected motion data may be obtained by receiving, detecting, or identifying the in-ear detected audio data and the in-ear detected motion data respectively. In some examples, the user input is a gesture.

Some examples include means for using a microphone of the ear-worn terminal for obtaining the in-ear detected audio data.

Some examples include means for generating the in-ear detected audio data and the in-ear detected motion data as a result of at least one of a user action at or near the ear-worn terminal and a motion detected at a motion sensor. The user action may be an over-earbud gesture, or an over-ear gesture.

Some examples include means for generating the in-ear detected motion data as a result of a physical gesture on the outer ear.

In some examples, the in-ear detected audio data and the in-ear detected motion data may be obtained at the same time.

Some examples include means for generating one or more control signals based on the determined user input.

Some examples include means for using the one or more control signals for controlling the ear-worn terminal.

In some examples, the means for generating the one or more control signals comprises a machine-learning module.

Some examples include means for training the machine-learning module before deployment and/or during use of the said apparatus.

Some examples include: means for receiving information related to a new gesture; means for determining whether the new gesture is similar to an existing gesture; and means for providing a warning if the new gesture is similar to an existing gesture. The means for training the machine-learning module may perform the training based at least partially on the information related to the new gesture.

Some examples include means for causing performance of one or more of a plurality of functions dependent on the one or more control signals.

In some examples, the means for causing the performance of the function(s) may be arranged to issue a corresponding instruction to a further data terminal associated with the ear-worn terminal.

In some examples, the ear-worn terminal is a wearable audio terminal.

The means may comprise: at least one processor; and at least one memory including computer program code, the at least one memory and the computer program code configured, with the at least one processor, to cause the performance of the apparatus.

In a second aspect, this specification describes a method comprising: obtaining in-ear detected audio data at an ear-worn terminal; obtaining in-ear detected motion data at the ear-worn terminal; and determining a user input based on a combination of the in-ear detected audio data and in-ear detected motion data. The in-ear detected audio data and the in-ear detected motion data may be obtained by receiving, detecting, or identifying the in-ear detected audio data and the in-ear detected motion data respectively. In some examples, the user input is a gesture.

Some examples may further comprise using a microphone of the ear-worn terminal for obtaining the in-ear detected audio data.

Some examples may further comprise generating the in-ear detected audio data and the in-ear detected motion data as a result of at least one of a user action at or near the ear-worn terminal and a motion detected at a motion sensor. The user action may be an over-earbud gesture, or an over-ear gesture.

Some examples may further comprise generating the in-ear detected motion data as a result of a physical gesture on the outer ear.

In some examples, the in-ear detected audio data and the in-ear detected motion data may be obtained at the same time.

Some examples may further comprise generating one or more control signals based on the determined user input.

Some examples may further comprise using the one or more control signals for controlling the ear-worn terminal.

Some examples may further comprise generating the one or more control signals comprises a machine-learning module.

Some examples may further comprise training the machine-learning module before deployment and/or during use of the said apparatus.

Some examples may further comprise: receiving information related to a new gesture; determining whether the new gesture is similar to an existing gesture; and providing a warning if the new gesture is similar to an existing gesture. The training of the machine-learning module may be performed based at least partially on the information related to the new gesture.

Some examples may further comprise causing performance of one or more of a plurality of functions dependent on the one or more control signals.

The performance of the function(s) may be arranged to issue a corresponding instruction to a further data terminal associated with the ear-worn terminal.

In some examples, the ear-worn terminal is a wearable audio terminal.

In a third aspect, this specification describes an apparatus configured to perform any method as described with reference to the second aspect.

In a forth aspect, this specification describes computer-readable instructions which, when executed by computing apparatus, cause the computing apparatus to perform any method as described with reference to the second aspect.

In a fifth aspect, this specification describes a computer program comprising instructions for causing an apparatus to perform at least the following: obtaining in-ear detected audio data at an ear-worn terminal; obtaining in-ear detected motion data at the ear-worn terminal; and determining a user input based on a combination of the in-ear detected audio data and in-ear detected motion data.

In a sixth aspect, this specification describes a computer-readable medium (such as a non-transitory computer-readable medium) comprising program instructions stored thereon for performing at least the following: obtaining in-ear detected audio data at an ear-worn terminal; obtaining in-ear detected motion data at the ear-worn terminal; and determining a user input based on a combination of the in-ear detected audio data and in-ear detected motion data.

### Brief description of the drawings

Example will now be described, by way of non-limiting examples, with reference to the following schematic drawings, in which:
FIG. 1 is an ear-worn terminal used in an example;
FIG. 2 shows an ear including an ear-worn terminal in accordance with an example;
FIG. 3 is a flow chart showing an algorithm in accordance with an example;
FIG. 4 shows a user gesture in accordance with an example;
FIG. 5 is a flow chart showing an algorithm in accordance with an example;
FIG. 6 is a block diagram of a system in accordance with an example;
FIG. 7 is a flow chart showing an algorithm in accordance with an example;
FIG. 8 is a block diagram of a system in accordance with an example;
FIG. 9 is a block diagram of a system in accordance with an example;
FIG. 10 is a flow chart showing an algorithm in accordance with an example;
FIG. 11 is a flow chart showing an algorithm in accordance with an example;
FIG. 12 is a block diagram of components of a system in accordance with an example; and
FIGS. 13A and 13B show tangible media, respectively a removable non-volatile memory unit and a compact disc (CD) storing computer-readable code which when run by a computer perform operations according to examples.

### Detailed description

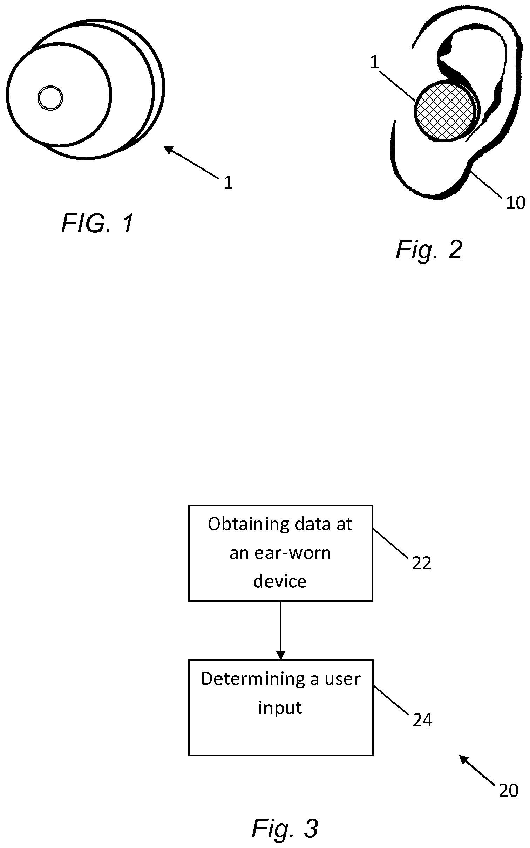

FIG. 1 is an ear-worn terminal, indicated generally by the reference numeral 1, used in an example. The ear-worn terminal 1 may, for example, be a wearable audio terminal (such as an earbud, earphones, headphones or a loudspeaker for placement adjacent to one or more of a user's ears). The ear-worn terminal 1 may be a wireless device or a wired device.

FIG. 2 shows an ear 10 in accordance with an example. An example ear-worn terminal 1 is sited at least partially within the ear. In the event that the ear-worn terminal 1 is an audio terminal (such as an earbud), audio output by the ear-worn terminal 1 may be heard using the ear 10.

An ear-worn terminal (such as the ear-worn terminal 1) may be provided with a user-interface in order, for example, to enable a function or a setting of the ear-worn terminal to be changed. Often, the ear-worn terminal is associated with another device (such as a smartphone or a music player). In such cases, it is possible to that the other device (e.g. a smartphone) may provide a user interface for the ear-worn terminal. It may, however, be convenient to provide such a user interface as a part of the ear-worn terminal. For example, an earbud may be provided with one or more push-button switch(es) (e.g. for volume or function setting).

FIG. 3 is a flow chart showing an algorithm, indicated generally by the reference numeral 20, in accordance with an example.

The algorithm 20 starts at operation 22, where data (e.g. user interface data) is obtained (received, detected, or identified) at an ear-worn terminal (such as the ear-worn terminal 1 described above). At operation 24, a user input is determined. An instruction or action may be implemented (for example, a control signal may be generated) based on the determined user input.

As described below, the data obtained at operation 22 of the algorithm 20 may be provided in the form of a user gesture. Thus, the user input may be a gesture, or may be determined based on the user gesture for in-ear terminals, such as the ear-worn terminal 1 described above.

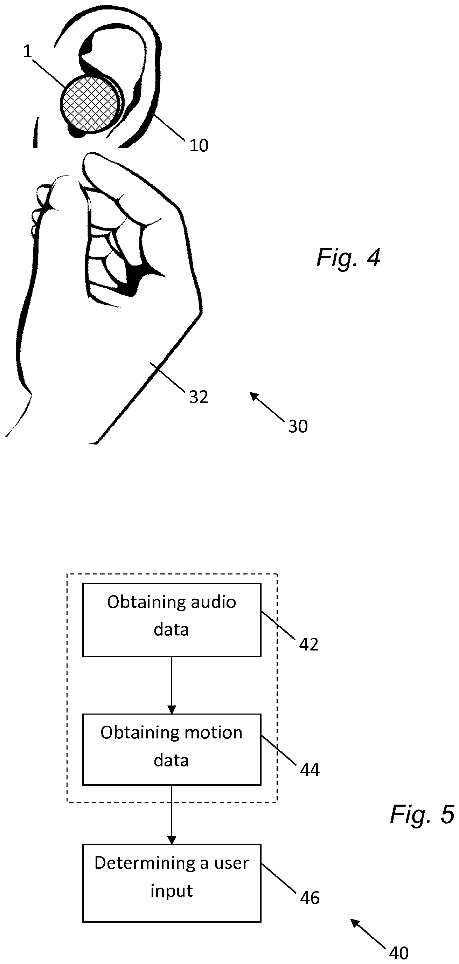

FIG. 4 shows a user gesture, indicated generally by the reference numeral 30, in accordance with an example. The user gesture 30 may be detected as the data obtained in the operation 22 of the algorithm 20 described above.

The user gesture 30 may be made in the vicinity of the ear 10 by a hand 32 of a user. As shown in FIG. 4, the ear 10 includes the ear-worn terminal 1. The user gesture 30 may take many forms including a user gesture on the ear 10 and/or the ear-worn terminal 1.

The user gesture 30 may include one or more of the following example gestures:
- Pulling down on the ear 10;
- Scratching a surface of the ear-worn terminal 1, for example, using a nail of the hand 32;
- Pushing the earlobe of the ear 10;
- Scraping a backside of the ear 10;
- Knocking or tapping (one or more times) on the surface of the ear-worn terminal 1, such that a different gesture may be defined based on the number of times the knocking or tapping is performed;
- Running fingers up or down a helix of the ear 10;
- Pinching the lobe of the ear 10;
- Flicking the lobe of the ear 10;
- Sliding a finger up and/or down the earlobe of ear 10;
- Folding the outer part of the ear 10 forward and/or backward; and
- Flicking the tragus of the ear 10.

It will be appreciated that there may be many other types of gestures performed at the ear 10 and/or ear worn terminal 1. In an example, the user gesture 30 may be a combination of one or more of the gestures mentioned above. A specific combination in a defined order may be used for defining user gesture 30. Moreover, the direction and/or strength of a gesture may be variable. Gestures having different directions and/or strengths may, for example, be associated with different user inputs or actions and/or with variants of similar user inputs or actions.

In the context of interfacing with ear-worn terminals, such as in-ear devices or earbuds, the user gesture 30 shown in FIG. 4 is an example of an over-ear gesture. An over-ear gesture is one in which a user (such as the hand 32) is directly touching an ear (such as the ear 10) in which a terminal (such as ear-worn terminal 1) is worn. For example, as shown in FIG. 4, the user's hand may be in contact with the ear. An over-ear gesture may, for example, include pulling or pushing on an earlobe.

In contrast, an over-earbud gesture is made when a user is directly touching an ear-worn terminal, such as in-ear devices or an earbud. Thus, if the hand 32 were to touch the ear-worn terminal 1, this would be an example of an over-earbud gesture. Examples of over-earbud gestures include scratching or clicking on an earbud using a user's nail.

FIG. 5 is a flow chart showing an algorithm, indicated generally by the reference numeral 40, in accordance with an example.

At operation 42 of the algorithm 40, in-ear detected audio data is obtained (e.g. by receiving, detecting or otherwise identifying the audio data). The in-ear detected audio data may be generated as a result of user action at or near the ear-worn terminal (such as tapping or scratching at or near the audio terminal). The audio data may be obtained using a microphone of said ear-worn terminal. The mechanics of the human ear make collecting audio data using an ear-worn terminal particularly attractive.

At operation 44 of the algorithm 40, in-ear detected motion data is obtained (e.g. by receiving, detecting or otherwise identifying the motion data). The motion data may be obtained using a motion sensor of said ear-worn terminal, such as an inertial measurement unit (IMU) or an accelerator (e.g. a multi-axis accelerometer). The IMU may take many forms, such as one or more accelerometers and/or one or more gyroscope sensors. The IMU may form part of the ear-worn terminal 1.

In-ear detected audio data may represent audio data detected by the ear-worn terminal 1 from within the ear of the user. Similarly, the in-ear detected motion data may represent motion data detected by the ear-worn terminal 1 from within the ear of the user.

It should be noted that, in different examples, the operation 42 may be carried out before the operation 44, the operation 44 may be carried out before the operation 42 or the operations 42 and 44 may be carried out simultaneously.

The in-ear detected motion data generated in operation 44 may be generated as a result of a physical gesture on the outer ear (as described above with reference to FIG. 4). The physical gesture may, for example, comprise a tug or a bend of the ear. The motion detected at an in-ear motion sensor may be the result of movement of the outer ear imparting a movement on the motion sensor. Note that the sensor movement may be different to the outer ear movement, but the system may be trained in order to associate a motion sensor movement with the ear movement that caused it.

At operation 46, a user input is determined based, at least partially, on a combination of the in-ear detected audio data and the in-ear detected motion data. The user input may have various uses, such as analysis of the user's physical actions, controlling the ear-worn terminal 1, controlling other devices or data terminals associated with the ear-worn terminal 1, or the like.

In one example, one or more control signals are generated based on the determined user input. The control signal may be a multi-modal or fused signal, with the signal being fused from different sensor types. Fusing sensor data from multiple sources can enable the provision of more complicated and/or more accurate sensing. Moreover, in some instances, combining data from multiple sources makes it possible to more accurately discriminate between different input gestures. The control signals may be used for controlling the ear-worn terminal 1. Alternatively, or in addition, the control signals may be used for controlling other devices or data terminals associated with the ear-worn terminal 1.

As noted above, the in-ear detected audio data (obtained at operation 42) and the in-ear detected motion data (obtained at operation 44) may be obtained at the same time (as indicated by the dotted box in FIG. 5). For example, the audio data and motion data may be generated in response to the same stimulus, or in response to different stimuli that are applied at the same time (such as, for example, pulling on an earlobe whilst simultaneously tapping on the ear-worn terminal). Providing multiple stimuli at the same time can provide a simple and intuitive mechanism to enable a wide range of user interface inputs.

Enabling a user to use their hands to provide a user input can provide a convenient and intuitive user interface, enabling a rich set of user interaction possibilities. User inputs in the form of gestures may be natural to at least some users. Moreover, the close proximity of the user's hands to sensing devices within the ear is particularly convenient.

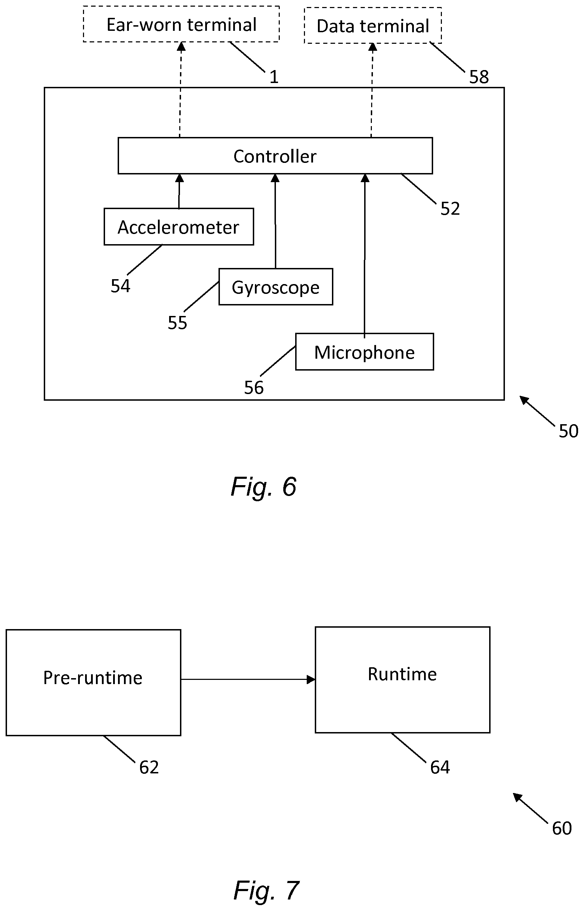

FIG. 6 is a block diagram of a system, indicated generally by the reference numeral 50, in accordance with an example. The system 50 comprises a controller 52, an accelerometer 54, a gyroscope 55 and a microphone 56. The controller 52 receives inputs from one or more of the accelerometer 54, the gyroscope 55 and the microphone 56. The controller 52 provides a control signal that forms an output of the system 50. The control signal may, for example, be provided to the ear-worn terminal 1 and/or a data terminal 58 (such as a smartphone). The data terminal may, for example, be physically close to the ear-worn terminal 1 and may be used to control aspects the functionality of the ear-worn terminal. (As noted elsewhere herein, the provision of a data terminal 58 is not essential to all examples.)

The controller 52 may be configured to implement the algorithm 40 described above. Thus, the in-ear audio data obtained in the operation 42 may be obtained from the microphone 56 and the in-ear detected motion data for controlling said ear-worn terminal may be obtained from the accelerometer 54 and/or the gyroscope 55. The accelerometer 54 and/or the gyroscope 55 may form the inertial measurement unit (IMU) described above. It should be noted that the accelerometer 54 and the gyroscope 55 are provided by way of example only - other motion sensor configuration are possible.

The control signal output by the controller 52 may cause performance of one or more of a plurality of functions dependent on said control signal. The plurality of functions may include one or more of the following example functions:
- Increasing or decreasing volume of an audio output of the ear-worn terminal 1; for example, an example gesture, such as running a finger up or down the helix of the ear 10, may cause performance of the function of increasing or decreasing the volume;
- Receiving an incoming call at a device (such as a phone) associated with the ear-worn terminal 1; for example, an example gesture, such as flicking the earlobe of the ear 10, may cause performance of the function of receiving a call;
- Cancelling a notification at a device (such as a phone) associated with the ear-worn terminal 1; for example, an example gesture, such as folding the outer part of the ear 10 forward and/or backward, may cause performance of the function of cancelling a notification;
- Controlling playback of music played as an audio output of the ear-worn terminal 1 or another device; for example, an example gesture, such as sliding a finger up and/or down the earlobe of ear 10, may cause performance of the function of controlling playback of music, such that when the finger is slid up, a previous song in a playlist may be played, and when the finger is slid down, a next song in the playlist may be played;
- Initiating and/or terminating phone calls; for example, an example gesture, such as pulling down on the earlobe of ear 10, may cause performance of the function of initiating a call; an example gesture, such as pinching the earlobe, may cause performance of the function of terminating a call;
- Activating or deactivating noise cancelling; for example, an example gesture, such as scratching a surface of the ear-worn terminal 1, may cause performance of the function of activating or deactivating noise cancelling;
- Switching between applications of a device or data terminal (such as a phone) associated with the ear-worn terminal 1; for example, an example gesture, such as pushing the earlobe of the ear 10, may cause performance of the function of switching between applications (for example switching from a music application to a podcast application), such that the user may keep pushing the earlobe until the desired application is started;
- Adding one or more songs or playlists to a favourites list; for example, an example gesture, such as scraping the backside of the ear 10 when a particular music or playlist is playing, may cause performance of the function of adding the particular playlist to a favourites list; and
- Activating or deactivating fitness tracking on the ear-worn terminal 1; for example, an example gesture, such as double knocking the surface of the ear-worn terminal, may cause performance of the function of activating or deactivating fitness tracking on the ear-worn terminal 1.

It will be appreciated that there may be many other types of functions performed based on the determined user input instead of, or in addition to, the functions listed above. The above correlations between functions and gestures are provided as examples only, such that different gestures may be corresponding to different functions.

Thus, the system 50 can be used as a user interface to enable a system (such as the ear-worn terminal 1) to be controlled depending on the output of sensors such as accelerometers, gyroscopes and microphones.

FIG. 7 is a flow chart showing an algorithm, indicated generally by the reference numeral 60, in accordance with an example. The algorithm 60 comprises a pre-runtime stage 62 and runtime stage 64.

The pre-runtime stage 62 may include functions such as defining gestures that will be used as user input in the runtime stage 64 and training an audio-kinetic model of the relevant ear-worn terminal 1 to enable the detection of such gestures. Thus, the pre-runtime stage 62 can be used to train the ear-worn terminal 1 such that the audio data and motion data discussed above with reference to the operations 42 and 44 can be detected.

The pre-runtime stage 62 may be conducted at a product manufacturing company (such as the manufacturer of the ear-worn terminal 1). Alternatively, or in addition, the pre-runtime stage 62 may be implemented at the initial deployment stage of the ear-worn terminal 1.

For example, a relevant product manufacturer may define commonly used, representative gestures and equip a global audio-kinetic model for those gestures into the ear-worn terminal such that a user can use those representative gestures to interface with the ear-worn terminal as soon as they purchase the product.

Furthermore, the user may be able to define further gestures (and/or refine or replace existing gestures), thereby training and personalizing the audio-kinetic model.

The runtime stage 64 may be used to implement the algorithms 20 and 40 described above. Thus, the runtime stage 64 may involve detecting user gestures and mapping user gestures to applications and functionality. For example, a particular user gesture (e.g. a tug on the left ear) may be mapped to a particular function (such as increasing the output volume). The runtime stage 64 may further comprise providing online learning to improve a pre-trained model using audio-kinetic data collected at runtime.

Online learning refers to training of the audio-kinetic module during the usage, i.e. during the run-time stage 64, using data collected as a result of the user using the audio-kinetic model. In online learning, the audio-kinetic model may be continuously improved with new data, and possibly adapted to specific user environments or user preferences. The audio-kinetic model is updated during an inference stage in order to obtain real user data for training the audio-kinetic model.

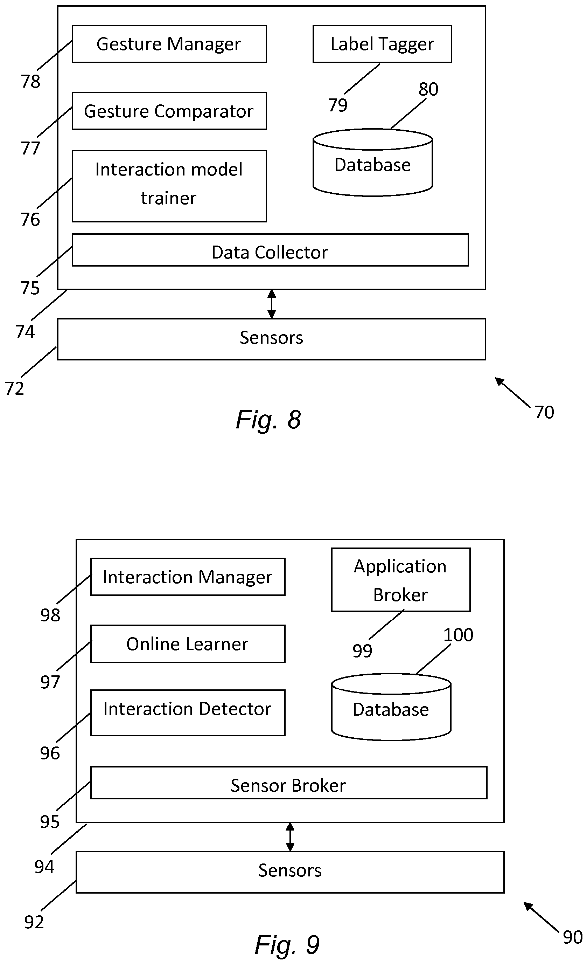

FIG. 8 is a block diagram of a system, indicated generally by the reference numeral 70, in accordance with an example. The system 70 shows an example system architecture that may be operable during the pre-runtime stage 62 described above.

The system 70 comprises a plurality of sensors 72 that provide inputs to a control module 74 of the system 70. The sensors 72 may comprise one or more accelerometers, one or more gyroscopes and/or one or more microphones (although other sensors may be provided in addition to, or instead of, those sensors).

As described above, the sensors 72 may be incorporated within an example ear-worn terminal 1. The control module 74 may be incorporated within the ear-worn terminal 1. Alternatively, some, or all, of the functionality of the control module 74 may be provided elsewhere (for example at a remote server). In some examples, some aspects of the control module 74 may be implemented remotely (which may, for example, enable an earbud manufacturer, or some other entity, to use remote processors to process gesture data from a large number of users) and some aspects of the control module 74 may be provided locally at the ear-worn terminal 1 (which may, for example, enable a user to personalize an audio-kinetic model).

The control module 74 comprises a data collector 75, an interaction model trainer 76, a gesture comparator 77, a gesture manager 78, a label tagger 79 and a database 80.

The gesture manager 78 allows users (or developers) to specify gestures for use in user input. A gesture may include a number of parameters or fields, such as one or more selected from the group of:
- gesture type;
- event;
- ear;
- direction;
- duration; and
- intensity.

As described elsewhere, the "gesture type" parameter may include "over-ear" and "over-earbud" values.

The "event" parameter may represent the gesture event, such as: pulling down the ear, pushing the earlobe, scratching an earbud etc.

The "ear" parameter may represent the ear where the gesture is made (e.g. left ear, right ear, both ears simultaneously).

The "direction" parameter may represent a direction in which a gesture is made (e.g. up, down, left, right, middle).

The "duration" parameter may represent the duration of the gesture (e.g. short, middle, long, or a numerical duration).

The "intensity" parameter may represent the intensity applied when making the gesture (e.g. weak, middle, strong, or a numerical strength).

The parameter-types and the example values of those parameters described above are provided by way of example only. Alternative parameters-types and values may be provided instead of, or in addition to, some or all of the examples provided above.

In order for the system 70 to be used for training (as part of the pre-runtime stage 62), data (for example in-ear detected audio data and in-ear detected motion data) may be collected from the sensors 72 by the data collector 75. Thus, the data collector 75 may collect accelerometer, gyroscope and/or microphone data (and/or other data if other sensors are used). The collected data is stored in the database 80.

When collecting data, the label tagger 79 tags the data with information relating to the gesture that was being made (which information is known in the training phase). Once the data collection is complete, the interaction model trainer 76 trains an interaction model. The interaction model trainer 76 may be implemented in many ways. For example, an inference pipeline for model training can be flexibly composed using machine-learning techniques. Known algorithms may be used as part of the model training (e.g. using Fast Fourier Transform (FFT) for processing inertial sensor data, MFCC for processing audio data). Moreover, known classifiers may be used for classifying data (e.g. Convolutional Neural Networks (CNN), Long Short-Term Memory Networks (LSTM), etc.).

For a given sensor, the interaction model outputs the parameter values of the gestures during a training phase (e.g. Type, event, ear, direction, duration, intensity etc.).

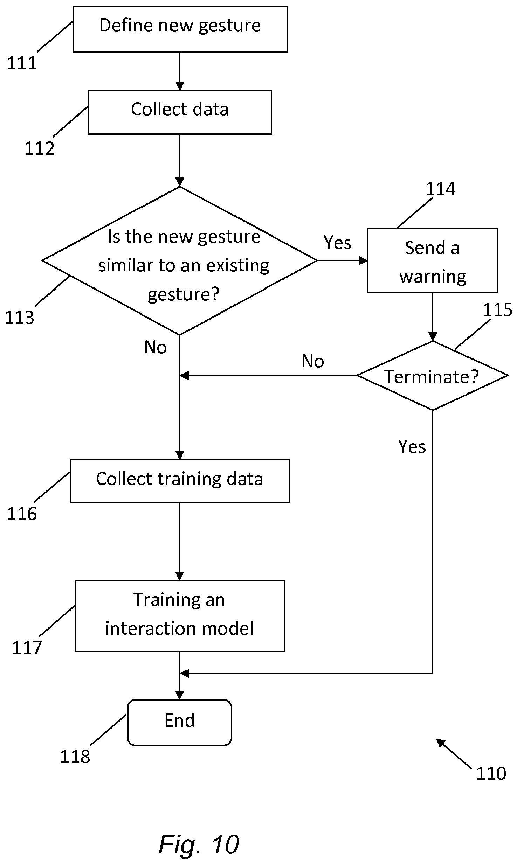

When a new gesture is to be trained, the gesture comparator 77 compares the similarity of the new gesture with pre-registered gestures. The gesture comparator 77 may provide a warning in the event that a new gesture shows similar patterns of sensor data to pre-registered gestures. The similarity may be computed based on the correlation of raw sensor data. Further details of the functions of the gesture comparator 77 are discussed in FIG. 10.

Gesture detection in some examples may, by default, use both motion data and audio data simultaneously. Fusing multiple sensing channels may achieve higher accuracy by capturing richer information. Also, even though one type of sensor data may rarely contribute to a particular gesture detection (e.g. the microphone may be of limited relevance to detect a "pulling down on the ear" gesture), the classification can adopt the relevant weight in the learning phase, and thus discard unnecessary sensor data.

It should be noted that in some examples, a user (or a developer) may have the option to make selective use of data (e.g. only motion data or only audio data). This may be advantageous, for example, in order to reduce energy consumption or to reduce data storage and/or processing demands. It may also be helpful in scenarios where the reliability of one of the data sources is compromised, for example where there is significant background noise or where external objects interfere with the movement of the ear (e.g. the user is wearing a helmet that touches the ear). In such circumstances, rather than entirely disregarding a data source, a weight attached to data from that source may be reduced, so that it is temporarily less influential in determining user gestures relative to the other data source(s).

FIG. 9 is a block diagram of a system, indicated generally by the reference numeral 90, in accordance with an example. The system 90 shows an example system architecture that may be operable during the runtime stage 64 described above.

The system 90 comprises a plurality of sensors 92 that provide inputs to a control module 94 of the system 90. The sensors 92 may comprise one or more accelerometers, one or more gyroscopes and/or one or more microphones (although other sensors may be provided in addition to, or instead of, those sensors).

As described above, the sensors 92 may be incorporated within an example ear-worn terminal 1. The control module 94 may be incorporated within the ear-worn terminal. Alternatively, some, or all, of the functional of the control module 94 may be provided elsewhere (for example at a remote server). In some examples, some aspects of the control module 94 may be implemented remotely and some aspects of the control module 94 may be provided locally at the ear-worn terminal 1. This may, for example, have data processing advantages.

The control module 94 comprises a sensor broker 95, an interaction detector 96, an online learner module 97, an interaction manager 98, an application broker 99 and a database 100.

In order for the system 90 to be used in the detection of gestures, data is collected from the sensors 92 by the sensor broker 95. Thus, the sensor broker 95 may collect accelerometer, gyroscope and/or microphone data (and/or other data if other sensors are used). The collected data is stored in the database 100.

The interaction detector 96 detects a gesture using the interaction model generated during the pre-runtime stage (e.g. by the interaction model trainer 76, as described above).

The interaction manager 98 allows users to specify a mapping between gestures and control signals and/or functions. Thus, referring to FIG. 3, on determination of a user input (as a result of data obtained in operation 22), the interaction manager 98 determines the control signal to be generated and/or a function to be perfomed. Thus, for example, the interaction manager 98 may be programmed (by one or more of a user, a developer and a manufacturer) to specify that pulling down the bottom part of the right ear for a short time should be understood to mean that the user wishes to switch to a podcast application. The application broker 99 may send control commands to an application when a gesture is made. Thus, in the example above, the command for switching to a podcast application may be sent to a paired smartphone.

The sensor data collected by the sensor broker 95 may be stored in the database 100 and used, by the online learner module 97, to update an interaction model on the basis of real data collected in the usage of the system. As discussed earlier in FIG. 7, the online learner module 97 may be used for online learning and updating the interaction model (audio-kinetic model) during the run-time stage 64.

FIG. 10 is a flow chart showing an algorithm, indicated generally by the reference numeral 110, in accordance with an example. The algorithm 110 is an example implementation of the pre-runtime stage 62 described above.

The algorithm 110 starts at operation 111, where a new gesture for use in user input is defined. Thus, for example, a gesture "pulling down hard on the left earlobe for a short period of time" may be defined at operation 111.

Next, at operation 112, some data relating to the new gesture is collected. The label tagger 79 may be used to associate the data obtained in operation 112 with the new gesture identified in operation 111.

At operation 113, a determination is made regarding whether the new gesture defined in operation 111 is similar to any existing or pre-registered gestures. This may be problematic since using similar gestures increases the risk of a particular gesture being incorrectly identified. The operation 113 may be implemented based on the data collected in operation 112 and may be implemented by the gesture comparator 77 comparing the data collected in operation 112 with data stored in the database 80 for existing gestures.

If the operation 113 is answered in the negative, the algorithm moves to operation 116; otherwise the algorithm 110 moves to operation 114.

At operation 114, a warning is provided to the user that the new gesture is similar to an existing gesture. At operation 115, a decision may be taken (either by the system 70, by a user in response to the warning at operation 114 or in some other way) to terminate the algorithm (in which case the algorithm 110 terminates at operation 118). If a decision is taken to continue with training the interaction model with the new gesture, then the algorithm moves to operation 116.

At operation 116, training data for the gesture is collected. The label tagger 79 may be used to associate the data obtained in operation 116 with the new gesture defined in operation 111. Then, at operation 117, an interaction model for the new gesture is trained (by the interaction model trainer 76 described above). The algorithm 110 then terminates at operation 118.

A number of variants of the algorithm 110 are possible. For example, the data collection operations 112 and 116 may be merged into a single operation.

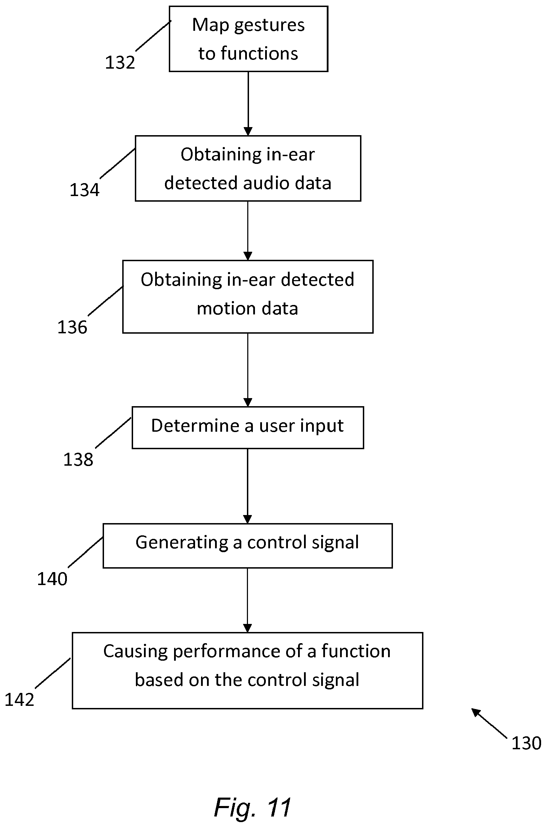

FIG. 11 is a flow chart showing an algorithm, indicated generally by the reference numeral 130, in accordance with an example. The algorithm 130 is an example implementation of the runtime stage 64 described above.

The algorithm 130 starts at operation 132, where gestures are mapped to particular functions. Thus, the operation 132 may be used (e.g. by one or more of a user, a developer and an ear-worn terminal provider) to indicate functions that should be carried out in response to detecting a particular gesture.

The operation 132 may be omitted (for example, if the gesture mappings are predefined). Alternatively, the operation 132 may be carried out as a part of a separate algorithm (e.g. as part of an initialisation process).

At operation 134, in-ear detected audio data is obtained (for example, using the microphone 56 that forms part of the sensors 92). At operation 136, in-ear detected motion data is obtained (for example, using motion sensors, such as the accelerometer(s) 54 and/or gyroscope(s) 55, that form part of the sensors 92).

The data obtained in the operations 134 and 136 may be obtained by the sensor broker 95 and stored in the database 100. Of course, the operations 134 and 136 could be performed in a different order or simultaneously.

At operation 138, one or more user inputs are determined based on the in-ear detected audio data and the in-ear detected motion data. Then, at operation 140, a control signal is generated dependent on the determined user inputs. As discussed earlier, the control signal may be used for controlling the ear-worn terminal 1, or other devices or data terminals associated with the ear-worn terminal 1.

Operation 138 and/or operation 140 may be implemented using a machine-learning module, such that the matching of the control signal to the detected audio and sensor data is likely to improve as more data is processed.

The online learner module 97 described above may be used for training the machine-learning module. Said training may be implemented before deployment and/or during use of said apparatus.

At operation 142, a performance of a function is caused based on the control signal generated. In one example, the function to be performed is to issue an instruction to a data terminal associated with the ear-worn terminal 1. The instruction may be used for controlling the data terminal.

In the examples described above, the ear-worn terminal is a wearable audio terminal (such as an earbud, earphones, headphones or a loudspeaker for placement adjacent one or more of a user's ears). This is not essential to all examples. For example, the ear-worn terminal may provide a user interface for some other purpose. Thus, for example, the ear-worn terminal could be an ear plug that is used to control a device or application, regardless of whether that device or application has an audio output.

Ear-worn terminals, such as wireless earbuds, may be provided with high levels of functionality, such as artificial intelligence, context monitoring capabilities and/or conversation interfaces. Such functionality may be provided instead of, or in addition to, audio output features. Such ear-worn terminals may enable functionality such as fitness-tracking, heart-rate monitoring, real-time translation and other contextual or situational services. It may be advantageous to provide user interface functionality directly at the ear-worn terminal. Moreover, by increasing the features that can be provided at the ear-worn terminal, it may be possible to provide such functionality without requiring the ear-worn terminal to be associated with another device (such as a paired smartphone, watch or other device) or dedicated hardware, such as a user interface screen.

Enabling user input to be provided at ear-worn terminals, such as the ear-worn terminal 1, enables user input to be provided despite the small form-factor of the terminal. At least some example implementations do not require the ear-worn terminal to be equipped with additional hardware, such as touch screen interfaces or additional buttons. This may have size, weight and cost advantages, as well as enabling the provision of user input and user interface solutions in existing ear-worn terminals.

Furthermore, as discussed earlier, the mechanics of the human ear make collecting audio data using an ear-worn terminal particularly attractive. Sound propagates very well through a body (for example, a human body). Due to the positioning of the inner ear, which is a cavity situated in the vicinity of bones, the inner ear and/or any device placed in the inner ear may be capable of detecting a variety of body propagated sounds. In comparison to other body parts, the ear may therefore be an ideal part for placing sensors for recording these body propagated sounds. Additionally, as the ear is partly external to the body, it may be convenient, hygienic, and comfortable for users to provide user input the sensors by using gestures on the ear or the ear-worn terminal. The ear also comprises many different parts of soft tissue that can be used for numerous types of gestures, and therefore numerous functions associated with the gestures. For example, a movement by the user on the helix may generate corresponding motion, as well as corresponding audio for defining a gesture. For these reasons, placing sensors in an ear-worn terminal placed inside the ear may be an effective way to obtain audio data and motion data, and fuse the audio data and motion data for determining a multi-modal user input.

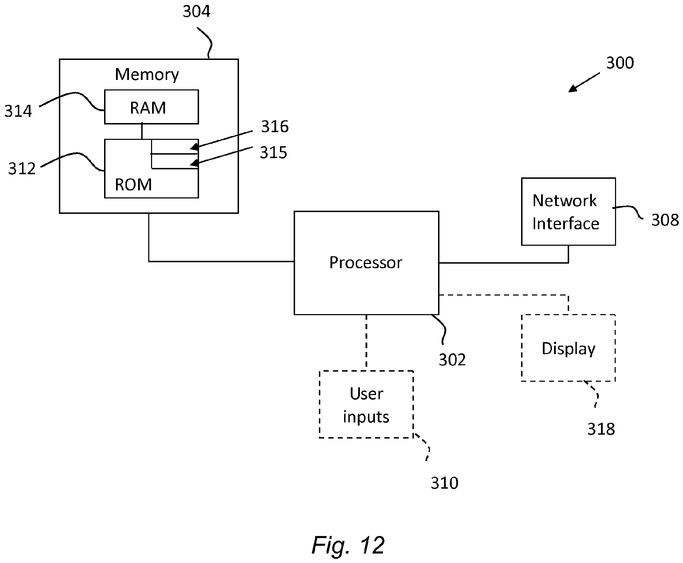

For completeness, FIG. 12 is a schematic diagram of components of one or more of the example embodiments described previously, which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network/apparatus interfaces 308 for connection to a network/apparatus, e.g. a modem which may be wired or wireless. Interface 308 may also operate as a connection to other apparatus such as device/apparatus which is not network side apparatus. Thus direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 314 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 20, 40, 60, 110, and 130 described above. Note that in the case of small device/apparatus the memory can be most suitable for small size usage i.e. not always hard disk drive (HDD) or solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

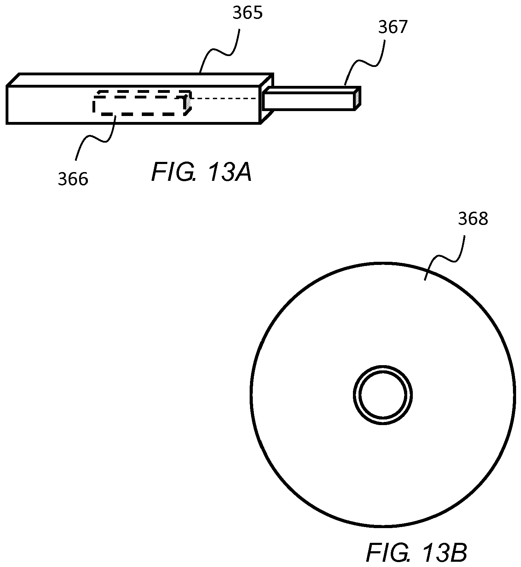

FIGs. 13A and 13B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 3, 5, 7, 10, and 11 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for obtaining in-ear detected audio data at an ear-worn terminal;
means for obtaining in-ear detected motion data at the ear-worn terminal; and
means for determining a user input based on a combination of the in-ear detected audio data and the in-ear detected motion data.

2. An apparatus according to claim 1 or claim 2, wherein the means for obtaining the in-ear detected audio data comprises means for using a microphone of the ear-worn terminal to obtain the in-ear detected audio data.

3. An apparatus according to any one of the preceding claims, wherein the in-ear detected audio data and the in-ear detected motion data comprises means for generating the in-ear detected audio data and the in-ear detected motion data as a result of at least one of a user action at or near the ear-worn terminal and a motion detected at a motion sensor.

4. An apparatus according to any one of the preceding claims, wherein the means for obtaining in-ear detected motion data comprises means for generating the in-ear detected motion data as a result of a physical gesture on the outer ear.

5. An apparatus according to any one of the preceding claims, wherein the in-ear detected audio data and the in-ear detected motion data are obtained at the same time.

6. An apparatus according to any one of the preceding claims, further comprising means for generating one or more control signals based on the determined user input.

7. An apparatus according to claim 6, further comprising means for using the one or more control signals for controlling the ear-worn terminal.

8. An apparatus according to claim 7, wherein the means for generating the one or more control signals comprises a machine-learning module.

9. An apparatus according to claim 8, further comprising means for training the machine-learning module before deployment and/or during use of said apparatus.

10. An apparatus according to claim 9, further comprising:
means for receiving information related to a new gesture;
means for determining whether the new gesture is similar to an existing gesture; and
means for providing a warning if the new gesture is similar to an existing gesture;
wherein the means for training the machine-learning module performs the training based at least partially on the information related to the new gesture.

11. An apparatus according to any one of the preceding claims, further comprising means for causing performance of one or more of a plurality of functions dependent on the one or more control signals.

12. An apparatus according to claim 10, wherein the means for causing the performance of the function(s) is arranged to issue a corresponding instruction to a further data terminal associated with the ear-worn terminal.

13. An apparatus according to any one of the preceding claims, wherein the ear-worn terminal is a wearable audio terminal.

14. A method comprising:
obtaining in-ear detected audio data at an ear-worn terminal;
obtaining in-ear detected motion data at the ear-worn terminal; and
determining a user input based on a combination of the in-ear detected audio data and in-ear detected motion data.

15. A computer program comprising instructions for causing an apparatus to perform at least the following:
obtaining in-ear detected audio data at an ear-worn terminal;
obtaining in-ear detected motion data at the ear-worn terminal; and
determining a user input based on a combination of the in-ear detected audio data and in-ear detected motion data.
